# EUROPEAN PATENT APPLICATION

(11) **EP 1 760 053 A2**
(43) Date of publication of application: **07.03.2007**
(21) Application number: 06119680.4
(22) Date of filing: 29.08.2006
(51) Int. Cl.: C04B 35/524, G01N 21/71, G01N 21/73, B05B 7/00

(54) **Corrosion-resistant member**

(30) Priority: 06.09.2005 JP 2005257209; 17.05.2006 JP 2006137742
(71) Applicant: Nisshinbo Industries, Inc., Chuo-ku, Tokyo 103-8650 (JP)
(72) Inventor: Ishimatsu, Takeshi, Tokyo 103-8650 (JP); Yamaguchi, Akira, Saitama 350-1114 (JP)
(74) Representative: Schwabe - Sandmair - Marx

(57) **Abstract**

To provide a material for devices that require good corrosion resistance and a property of less liquid remaining, such as jigs to load an article to be treated in a wet process and spray chambers for ICP analysis.

At least the surface of the devices that require good corrosion resistance and a property of no liquid remaining on the surface comprises glassy carbon with a surface roughness (Ra) of 10 *µ*m or less. When the device is a jig to load an article to be treated in a wet process, the purity of the surface to be in contact with liquid is 50 ppm or less in terms of ash content and the surface roughness (Ra) is 0.1 *µ*m or less. When the device is a spray chamber for ICP analysis, Ra is 0.1-10 *µ*m and the purity of the surface to be in contact with liquid is 50 ppm or less.

## Description

### TECHNICAL FIELD

The present invention relates to a corrosion-resistant member comprising glassy carbon and having excellent resistance to chemicals and lyotropic property, and more particularly to jigs to load an article to be treated in a wet process and spray chambers for ICP (inductively coupled plasma) analysis to use in ICP analysis apparatuses such as ICP-MS (inductively coupled plasma mass spectrometer) and ICP-AES (inductively coupled plasma atomic emission spectrometer).

### BACKGROUND ART

Because jigs to load an article to be treated in a wet process and spray chambers for ICP analysis are important applications of the corrosion-resistant member of the present invention, the prior art technology in those fields are discussed below.

### (Jigs to load an article to be treated in a wet process)

Because impurities and foreign matters that adhered to wafer surface damage the performance of semiconductor devices, in the conventional semiconductor device fabrication procedures, wafer fabrication process include a cleaning process, and the impurities and foreign matters are removed by cleaning the wafer in the cleaning process.
The wafer is also etched in order to relieve strains introduced when the wafer was cut out from an ingot, to repair deformations on the front and rear surface of the wafer, and to remove a surface strain layer introduced when the front and rear surfaces of the wafer are smoothed and mirror finished by mechanical polishing, thereafter the wafer is cleaned in a cleaning process.
In the above-described etching process and cleaning process, a plurality of semiconductor wafers are mounted on a wafer holding jig, and the wafers are etched and cleaned by immersing the wafers into an etching solution or cleaning liquid.

In order to avoid reactions with the etching solution such as hydrofluoric acid and hydrochloric acid, fluororesins such as PTFE (polytetrafluoroethylene) and quartz glass have been used as materials for the semiconductor wafer holding jig used in those processes (Japanese Patents Nos. 3117591 and 3174496 and Japanese Patent Publication No. 11-130467).
However, when quartz glass is used, because hydrofluoric acid is often employed in the etching process and hydrofluoric acid or an alkali is often used in the cleaning process, quartz is eroded in those processes.

When a resin such as PTFE is used, because the resin has permeability, chemicals ooze into the resin in the etching process and cleaning process. Then, when the semiconductor wafer holding jig is transferred from one tank into another, a problem that the chemical or contaminant is carried over from the previous tank into the next tank arises. This problem is particularly serious in the processes conducted under reduced pressure.

Japanese Patent Publication No. 7-230891 describes using a jig to remove electric charges from semiconductor wafers in which at least one groove to support the semiconductor wafer is formed in the width direction of high-purity glassy carbon and protrusions to discharge static electricity are formed in the longitudinal direction at the distal tip, in order to remove electric charge on a semiconductor wafer induced by static electricity that is generated in a cleaning container used in the cleaning process of the semiconductor wafer or in a carry container used to convey it among the individual processes.
However, the jig described in Japanese Patent Publication No. 7-230891 was designed for the object of removing static electricity and the problem of carrying over the chemical or contaminants into the next tank when the semiconductor wafer holding jig is transferred from tank to tank was not considered at all.

### (Spray chamber for ICP analysis)

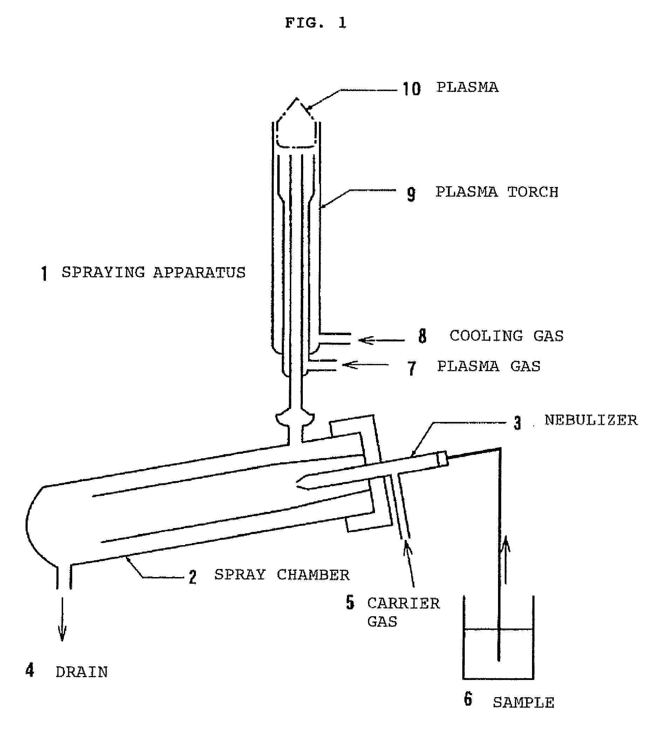

A basic configuration of Scott spray chamber is shown in Fig. 1 as an example of a spray chamber for ICP analysis. In spraying apparatus 1 of an ICP analyzer, nebulizer (atomizer) 3 to spray solution sample 6 by suction with carrier gas 5 and spray chamber 2 to classify the droplets of the solution mist by size are used to introduce solution sample 6 into plasma torch 9.
Among those units, in spray chamber 2, only the droplets of small diameter are fed into plasma torch 9, and particles of a large diameter are discarded as drain 4.

For analysis with ICP, the material of the spray chamber has to be selected according to the sample to be analyzed. Thus, Pyrex glass (registered trademark) suitable for analyzing high-concentration samples in ICP-AES analysis and glass such as a quartz glass of high purity suitable for analyzing samples of extremely small quantity for which the Pyrex glass (registered trademark) is inappropriate are usually used as materials for the spray chamber. However, glasses cannot be used when a sample containing hydrofluoric acid, phosphoric acid, or the like is analyzed. Accordingly, the material of the spray chamber has to be replaced with another made of resin such as PTFE (polytetrafluoroethylene) and PFA (tetrafluoroethylene perfluoroalkylvinyl ether copolymer).

Yet another problem is that a measurement error is caused by adhering elements present in a sample solution to the wall of spray chamber or the like and admixing with the sample to be analyzed next. In other words, because the sample that was analyzed in the previous cycle remains inside spray chamber 2, the sample analyzed in the previous cycle affects the analysis results in the very beginning (memory effect). In particular when a spray chamber made from resin is used, due to a high permeability, even when a cleaning solution is supplied to clean the wall from a nozzle to inject a sample solution, the memory effect sometimes cannot be eliminated. In such cases, the spray chamber has to be taken off and immersed into an acid or the like to remove the contamination.
The problems associated with the above-described change of the spray chambers is that operations such as quenching and re-ignition of plasma that are required in addition to a simple replacement operation are troublesome and take longer-than-foreseen time before the next measurement can be started after the replacement.

Japanese Patent Publication No. 9-239298 discloses an device to clean out the sample remaining after the previous measurement in which a nozzle is attached to the inner surface of the spraying apparatus and a cleaning solution is introduced therefrom as liquid or mist. Japanese Patent Publication No. 8-201294 discloses an apparatus in which a cleaning solution spraying nozzle is installed separately from a liquid sample spraying nozzle and almost perpendicular thereto, to spray and supply the liquid sample and cleaning solution alternately into the atomizing chamber.
In those apparatuses, a special cleaning solution feed port is provided to supply the cleaning solution and some effect is apparently brought to shorten the duration of cleaning in the spray chamber, but accurate modification of the apparatus is necessary. In addition, it is still necessary, as in prior art, to change the spray chambers according to the sample type.

### DISCLOSURE OF THE INVENTION

With the foregoing in view, it is an object of the present invention to provide a material for members to be used in regions that are in contact with a corrosive chemical, this material having excellent resistance to chemicals and also retaining no chemical on the surface thereof (namely, having excellent lyotropic property).
More specifically, it is an object of the present invention to provide a jig to load an article to be treated in a wet process that does not require the change according to the type of chemical and has good liquid draining ability and also to provide a spray chamber for ICP analysis that does not require the change according to the type of chemical and can reduce the replacement frequency and to discard easily as a drain the sample that adhered to the wall surface (small memory effect) without special modifications of the apparatus.

In order to attain the above-described object, the inventors have studied thoroughly materials that do not require the change according to the sample type, which is a drawback of the conventional glass members, while maintaining or improving the merits (small memory effect) of the conventional glass members. The results obtained demonstrated that by making at least surface of the member that is in contact with liquid from glassy carbon, the samples are prevented from remaining on the surface, while the chemical resistance is maintained, as a result, the extension of cleaning time is avoided even when cleaning is conducted by the established method, without special modifications of the apparatus, and the replacement frequency of jigs to load an article to be treated or spray chambers is reduced. This finding led to the present invention.
The present invention can be described as follows.

(1) A corrosion-resistant member with excellent lyotropic property, wherein at least a surface thereof comprises glassy carbon having a surface roughness (Ra) of 10 µm or less.
(2) A jig for loading an article to be treated in a wet process, comprising a corrosion-resistant member of (1).
(3) A jig for loading an article to be treated in a wet process according to (2), wherein a surface roughness (Ra) of at least a surface to be in contact with a liquid is 0.1 µm or less.
(4) A jig for loading an article to be treated in a wet process according to (2) or (3), wherein a purity of the glassy carbon on at least a surface to be in contact with a liquid is 50 ppm or less in terms of ash content.
(5) A spray chamber for ICP analysis comprising a corrosion-resistant member according to (1).
(6) A spray chamber for ICP analysis according to (5), wherein a surface roughness (Ra) of the glassy carbon is 0.1 to 10 µm.

The effect demonstrated by using the glassy carbon material of the present invention for a structural member of the apparatus is that the member is not eroded by the chemical that comes into contact therewith and the chemical or the like does not remain on the surface of the member.
Because the jig to load an article to be treated in a wet process of the present invention does not require the change according to the type of the cleaning liquid, cleaning liquid does not remain on the surface thereof, then the chemical is not carried over to the next cleaning tank.
Because the spray chamber for ICP analysis of the present invention does not require the change according to the type of sample and the sample that adhered to the wall is readily discharged as drain even without special modifications of the apparatus, no disturbance is caused on subsequent measurements.

### BRIEF DESCRIPTION OF THE DRAWINGS

Fig. 1 is a schematic drawing illustrating an example of Scott spray chamber;

Fig. 2 is a schematic drawing illustrating an example of wafer cleaning process; and

Fig. 3 is a schematic drawing illustrating an example of cleaning jig.

### BEST MODE FOR CARRYING OUT THE INVENTION

The present invention employs glassy carbon as a material to be used in regions that come into contact with liquids.
The glassy carbon is obtained by using cellulose, furfuryl alcohol, phenolic resins, acetone, polycarbodiimide resin, furan resins, furfural resin, and other thermosetting resins, or a mixed resin thereof as the main component, molding the composition, or impregnating it into a part or coating a part therewith, curing, and then baking and carbonizing in an inert atmosphere or under vacuum.

The glassy carbon thus obtained is a highly pure dense substance that has excellent chemical resistance and wear resistance and generates no dust. Therefore, it is suitable for a material of a jig to load an article to be treated in a wet process in fabrication of semiconductors using hydrofluoric acid or alkalis, and for a material of a spray chamber for ICP analysis.

Due to restrictions imposed by the manufacturing process, the upper limit for the thickness of a plate-shaped body of glassy carbon that can be manufactured is 5 mm, and large three-dimensional shapes with a thickness above 5 mm are difficult to manufacture.
Because the jigs to load an article to be treated in a wet process and spray chambers for ICP analysis have a composite and complex three-dimensional shape, in order to produce them from glassy carbon, a method in which they are divided in several parts and corresponding glassy carbon members are fabricated and assembled is preferable.

Each part may be entirely manufactured with glassy carbon, or the parts may be formed by an aluminum material, graphite material, or the like and coated with glassy carbon over the entire surface thereof. Glassy carbon may coat only on the surface that comes into contact with liquids.
When the entire part is fabricated from glassy carbon, each part thereof may be formed from a resin, a liquid resin is applied to each part to adhere and baked, or parts are processed into the shape to be joined after baking and joined.
Individual parts may be molded by a method by which a liquid resin is introduced into a mold and cured, a method by which a powdered resin is hot press molded, or a method by which a powdered resin is injection molded.
Portions requiring accurate dimensions may be mechanically processed after baking.
For portions requiring strength, a sheath glassy carbon may be fabricated and a metal such as aluminum or SUS may be inserted therein as a core.

Methods suitable for forming glassy carbon only on the surface of parts include a method by which glassy carbon is formed into a film and the film is stuck to a part, and a method by which a resin serving as a starting material for glassy carbon is impregnated into or coated on a part or subjected to both the impregnation and the coating and then the resin is carbonized to cover the part.
The thickness of the glassy carbon coating is preferably 1 to 1000 µm, more preferably 2 to 100 µm. If the thickness is too small, problems about the endurance of the coating arise, and too large a thickness brings little effect.

In the present invention, the surface roughness (Ra) of the glassy carbon member obtained as above is 10 µm or less.
The hydrophobic - hydrophilic balance of glassy carbon can vary depending on the surface roughness thereof, and the surface roughness is controlled appropriately according to application.

Next, the case where the corrosion-resistant member of the present invention is used for a jig to load an article to be treated in a wet process and a spray chamber for ICP analysis will be described below as the suitable applications. (Jig to load an article to be treated in a wet process)

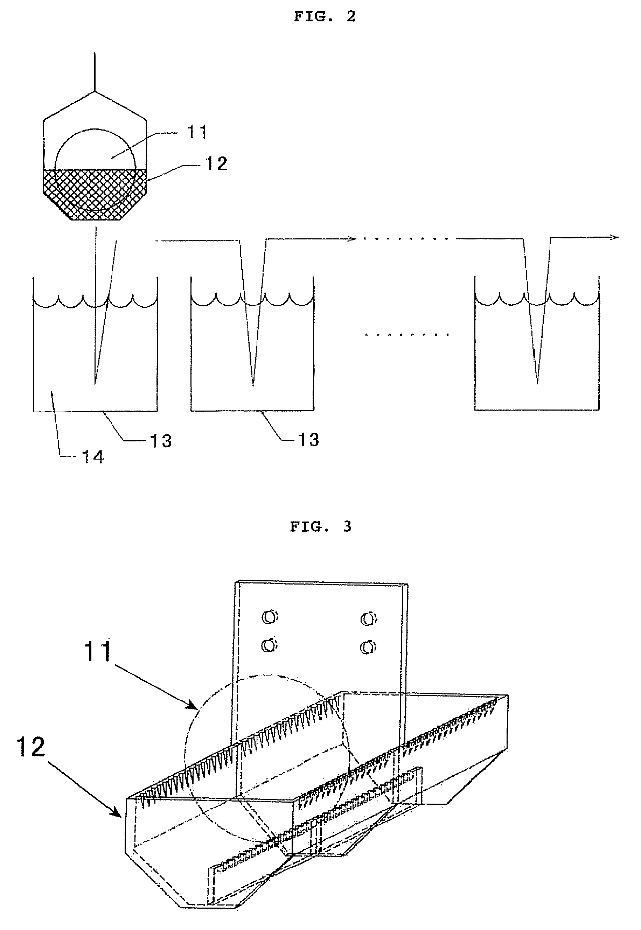

Fig. 2 is a schematic drawing illustrating a wafer cleaning process in semiconductor manufacturing process.
Wafer 11 is mounted on wafer loading jig 12, cleaned with chemical 14 in cleaning tank 13, and then transferred to next cleaning tank 13. Glassy carbon is used as a material for wafer loading jig 12. In this case, the surface roughness (Ra) of the glassy carbon surface is 0.1 µm or less, preferably at a mirror surface level (0.05 µm or less). By achieving such surface state, water draining is improved and the cleaning liquid is not carried over to the next tank. In addition, hydrofluoric acid is used as the chemical in this cleaning process. The cleaning liquid or impurities are not carried over to the next tank, because glassy carbon is not eroded by hydrofluoric acid and also because glassy carbon is a highly pure, dense substance and generates no dust.

Fig. 3 shows an example of a loading jig to load and to convey wafers. In the embodiment shown in Fig. 3, the loading jig 12 has a side holding bodies to hold the wafers in the horizontal direction and bottom holding bodies arranged parallel to the side holding bodies and serving to hold the wafers from below in the vertical direction. A plurality of grooves are formed with a predetermined spacing in the side holding bodies and the bottom holding bodies to fix the wafers.

Glassy carbon is not eroded by any chemical in use at a temperature close to room temperature. Therefore, it is not necessary to change the materials of the jig according to the type of chemical. In addition, since the density of glassy carbon is lower than that of quarts or PTFE, a load applied to a mechanism in automatic apparatus is small then running energy can be saved. Since the bending strength of glassy carbon is higher than that of PTFE, glassy carbon is not bent like PTFE even under a deflecting load.

### (Spray chamber for ICP analysis)

In the spray chamber for ICP analysis of the present invention, at least the inner wall of the spray chamber comprises glassy carbon.
Because glassy carbon exhibits excellent chemical resistance as described hereinabove, it can be also used for measurement of samples to which glass cannot be applied. And, because the surface of glassy carbon can be precisely controlled to a level equal or superior to that of glass, hardly any sample remains on the surface. For these reasons, even when cleaning is conducted by the established methods, without any special modification of the apparatus, the cleaning does not take much time and the replacement frequency of the spray chamber can be reduced.

The surface of glassy carbon preferably maintains hydrophilicity to decrease the memory effect. Accordingly, the surface roughness is preferably Ra = 0.1 to 10 µm, more preferably 0.1 to 5 µm. If the surface roughness is too small, the surface becomes water repellant, and if the surface roughness is too large, the measured sample sometimes remains on the surface.
The spray chamber according to the present invention can be used for spray chambers for ICP analysis of various types, such as Scott chamber or cyclone chamber.

### Examples

The constitution and effects of the present invention will be described below in greater detail based on Examples.
A wafer cleaning jig and a spray chamber will be explained hereinbelow as Examples, but the present invention is not limited to those Examples.

### <Test example in use of wafer cleaning jig>

### Example 1

The wafer cleaning jig comprised a plate section having grooves to load wafers, a plate section to support the aforementioned plate section, and a plate section to place on a mechanism. A glassy carbon plate was processed to produce each plate, and portions thereof that came into contact with liquid were polished to a surface roughness of Ra 0.05 µm to be a mirror finish. The individual plates were adhesively bonded with a phenolic resin serving as a starting material and again baked in an inert gas to obtain a wafer cleaning jig in which the joints were also formed with glassy carbon.
A total of 50 wafers were mounted onto the jig, immersed into 5% hydrofluoric acid, cleaned for 10 min in an ultrasonic cleaning machine, and pulled out. After that, the state of liquid draining from the jig and the wobbling and deformation of the wafers were checked. The operations were repeated 1000 times.

### Comparative Example 1

Glassy carbon plates were processed to obtain the individual plates in the same manner as in Example 1 and the surface was finished to a state of Ra 0.5 µm. The plates were adhesively bonded with a phenolic resin serving as a starting material and again baked in an inert gas to obtain a wafer cleaning jig in which the joints were also formed with glassy carbon.
The jig was subjected to the test identical to that of Example 1.

### Comparative Example 2

A plate of quartz (made by GE Quartz Co., Ltd., product number GE-012) was processed to produce each plate in the same manner as in Example 1, and the plates were welded and then annealed to obtain a quartz jig for wafer cleaning.
The jig was subjected to the test identical to that of Example 1.

### Comparative Example 3

A PTFE block was cut to obtain a PTFE jig for wafer cleaning.
The jig was subjected to the test identical to that of Example 1.
The evaluation results are shown in Table 1.

The evaluation was performed by the following method.

### [Evaluation method]

### <Liquid draining, deformation>

They were evaluated visually.

### <Wobbling>

Groove-like shapes were formed in the holding portions of the jig to load the wafers, and wobbling was assumed to occur when the groove-like shapes were etched to 100 µm.

**Table 1**

| | Liquid draining | Wobbling | Deformation |
|---|---|---|---|
| Example 1 | Good | None | None |
| Comparative Example 1 | Water drops appears | None | None |
| Comparative Example 2 | Good | Wobbling started from 340-th cycle | None |
| Comparative Example 3 | - | - | Deformation is large from the beginning, the test is impossible |

### <Test example about memory effect in use of spray chamber>

### Example 2

parts were cut out from a phenolic resin block, which had been cured at 200°C, by mechanical processing according to the dimensions derived by calculation of the shrinkage after baking. The parts were adhesively bonded by using a phenolic resin, and cured again at 200°C. Then, the parts were baked at 1800°C in an inert gas atmosphere to produce a spray chamber comprising glassy carbon, and this chamber was used for the test. The surface roughness Ra of the surface that came into contact with liquid was 0.2 µm.
Standard solutions B were prepared to be a concentration of 10 µg/L and 100 µg/L, and a calibration curve was obtained by successively introducing the samples, pure water containing no additives whose concentration was taken as 0, and standard solutions with a concentration of 10 µg/L and 100 µg/L. A standard solution B prepared to be a concentration of 50 µg/L was then measured.

### Comparative Example 4

The test was conducted in the same manner as in Example 2, except that a spray chamber comprising PTFE was used.
The ICP-MS apparatus SPQ9000 made by Seiko Instruments Co., Ltd. and the standard reagent of 1000 µg/L made by GL Science Co., Ltd. were used.
The results of Example 2 and Comparative Example 4 are shown in Table 2.

**Table 2**

| | Number of measurement cycles until an measured value of 50 µg/L |
|---|---|
| Example 2 | 1 cycle |
| Comparative Example 4 | 5 cycles (pure water was poured during the measurements and the measurements were performed with 2 min interval |

### (Test example about resistance to hydrofluoric acid in use of a spray chamber)

### Example 3

A phenolic resin was cured at 200°C and baked at 1800°C in an inert gas atmosphere to prepare a 30 x 30 x 3 mm (thickness) glassy carbon sample (surface roughness Ra of 0.2 µm). The sample was immersed in 5% hydrofluoric acid for one week (168 h) and the etched quantity was measured.

### Comparative Example 5

The test was conducted in the same manner as in Example 3, except that a quartz glass sample (made by GE Quartz Co., Ltd., product number GE-012) was used. The results of Example 3 and Comparative Example 5 are shown in Table 3.

**Table 3**

| | Etched quantity (mm) |
|---|---|
| Example 3 | 0.000 |
| Comparative Example 5 | 0.298 |

### INDUSTRIAL APPLICABILITY

The corrosion-resistant member according to the present invention can be advantageously used for parts of apparatuses that require corrosion resistance to corrosive liquids and less liquid remaining thereon after contact with the liquid.

## Claims

1. A corrosion-resistant member with excellent lyotropic property, wherein at least a surface thereof comprises glassy carbon having a surface roughness (Ra) of 10 µm or less.

2. A jig for loading an article to be treated in a wet process, comprising a corrosion-resistant member according to claim 1.

3. A jig for loading an article to be treated in a wet process according to claim 2, wherein a surface roughness (Ra) of at least a surface to be in contact with a liquid is 0.1 µm or less.

4. A jig for loading an article to be treated in a wet process according to claim 2 or 3, wherein a purity of the glassy carbon on at least a surface to be in contact with a liquid is 50 ppm or less in terms of ash content.

5. A spray chamber for ICP analysis, comprising a corrosion-resistant member according to claim 1.

6. A spray chamber for ICP analysis according to claim 5, wherein a surface roughness (Ra) of the glassy carbon is 0.1 to 10 µm.
